# EUROPEAN PATENT SPECIFICATION

(11) **EP 4 242 807 B1**
(45) Date of publication and mention of the grant of the patent: **09.12.2026**
(21) Application number: 23156952.6
(22) Date of filing: 16.02.2023
(51) Int. Cl.: G06F 3/044, G06F 3/041

(54) **PROXIMITY DETECTION DEVICE AND HOVER DETECTION METHOD**
NÄHERUNGSERKENNUNGSVORRICHTUNG UND SCHWEBEERKENNUNGSVERFAHREN
DISPOSITIF DE DÉTECTION DE PROXIMITÉ ET PROCÉDÉ DE DÉTECTION DE SURVOL

(30) Priority: 09.03.2022 JP 2022035919
(43) Date of publication of application: 13.09.2023
(73) Proprietor: Alps Alpine Co., Ltd., Ota-ku, Tokyo 145-8501 (JP)
(72) Inventor: Ichikawa, Teiichi, Iwaki-City, Fukushima (JP)
(74) Representative: Schmitt-Nilson Schraud Waibel Wohlfrom Patentanwälte Partnerschaft mbB

(56) References cited:
- US-A1- 2013 335 370
- US-A1- 2014 267 137
- US-A1- 2017 090 610
- US-A1- 2018 046 309
- US-A1- 2020 363 907
- US-A1- 2022 057 898

## Description

The present invention relates to a proximity detection device that detects the proximity of an object, and more particularly to a method of detecting the proximity (hover) of an object using a capacitive touch panel.

A touch panel is mounted in a display unit integrally with a liquid crystal panel or the like as an input interface for receiving an instruction from a user. For example, JP 2011-8725 A and JP 2017-182185 A disclose capacitive touch sensors. In addition, WO 2018/116706 A discloses a capacitance detection device for detecting an approach of an operation target, and describes a technique for suppressing a decrease in detection sensitivity due to the influence of a parasitic capacitor.

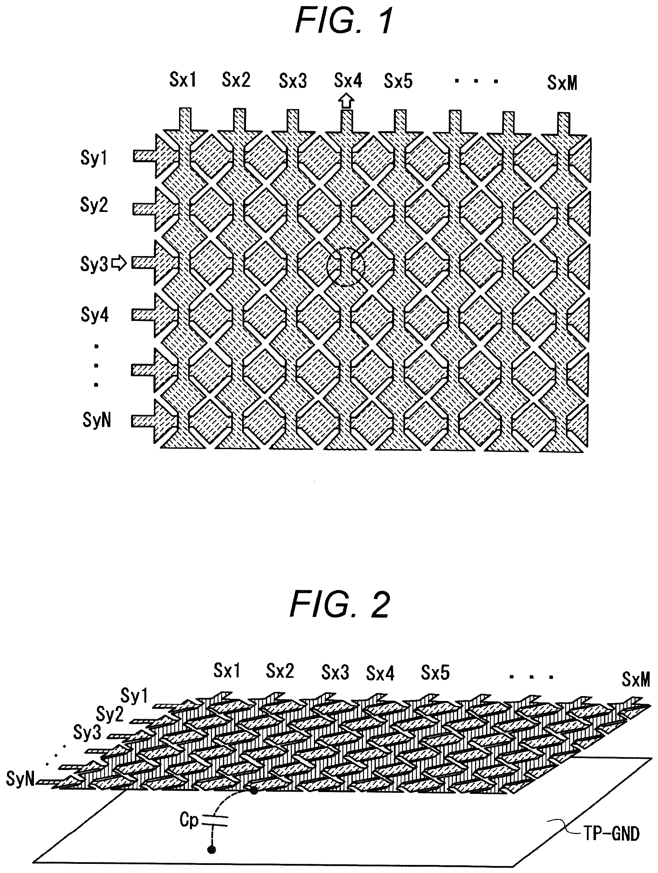

Fig. 1 illustrates an example of a sensor pattern of a capacitive touch panel. The sensor pattern illustrated in the figure is referred to as a diamond pattern, and M pieces of sensors (Sx1, Sx2, ..., SxM) arranged in the X direction and N pieces of sensors (Sy1, Sy2, ..., SyN) arranged in the Y direction cross each other, and at the intersection, the sensors in the X direction and the sensors in the Y direction are wired by a bridge so as not to come into contact with each other. As an example of the operation of the touch sensor, when the sensors Syj (j = 1, ..., N) arranged in the Y direction are driven, the touch operation at the intersection of the sensors Sxi and Syj is detected based on the change amount of the capacitance value Cm [i, j] obtained by each of the sensors Sxi (i = 1, ..., M) arranged in the X direction (generally referred to as a mutual capacitance type). Fig. 1 illustrates an example in which the capacitance Cm [4, 3] at the intersection is measured by the sensor Sx4 when a drive pulse is applied to the sensor Sy3. For example, when there is a finger touch, the capacitance Cm at that location is measured to be smaller.

In recent years, an approach (hover) of a finger before touching is detected using this sensor pattern. The change in capacitance caused by to the hover is much smaller than the change in capacitance caused by a touch, and sufficient sensitivity cannot be obtained by the method of detecting the capacitance at the intersection of the sensors Syj and Sxi as described above. Therefore, in the hover detection, a TP-GND layer (which is commonly known in the art) parallel to the sensor pattern as illustrated in Fig. 2 is arranged on the bottom surface, and a change in capacitance Cp between each sensor pattern (Sxi, Syj) and the TP-GND layer is detected. Specifically, each of the sensor lines Sxi and Syj is driven, and a change in capacitance of the driven sensor line itself is detected (generally referred to as a self-capacitance method). For example, when a finger approaches, the capacitance Cp at that location is measured to increase.

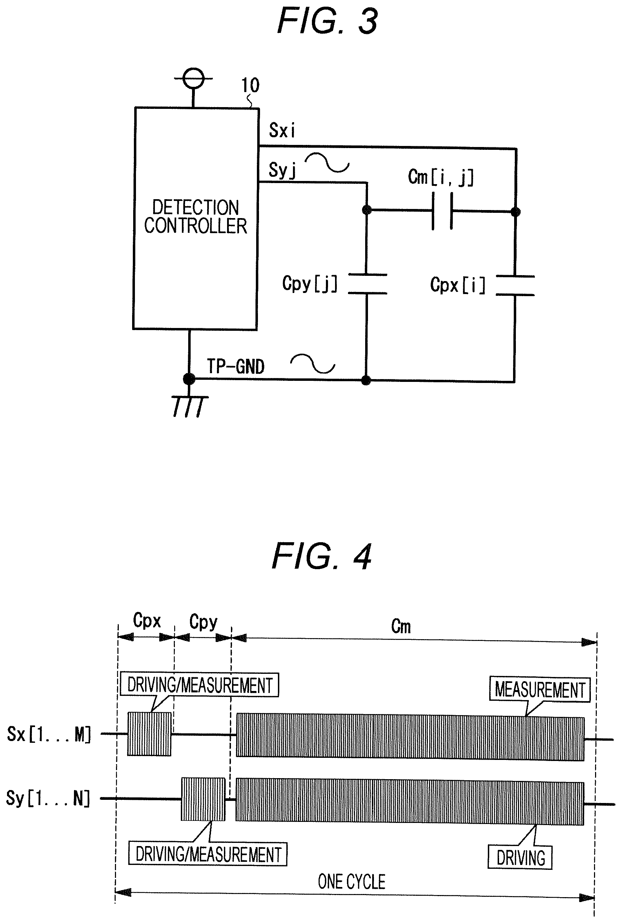

Fig. 3 is an equivalent circuit obtained by extracting one sensor in the X direction and one sensor in the Y direction from the sensor pattern of the capacitive touch panel illustrated in Fig. 2. A detection controller 10 applies a drive signal to the sensor line in the X direction or the Y direction, and detects the touch location based on the capacitance Cm measured by the sensor line in the Y direction or the X direction. In addition, the detection controller 10 measures its own capacitance Cpx when the sensor line Sx is driven, measures its own capacitance Cpy when the sensor line Sy is driven, and detects the hover location based on Cpx and Cpy.

To detect a touch location, capacitance Cm[i, j] formed between the sensor lines Sxi and Syj is measured, and to detect a hover location, capacitance Cpx[i] and capacitance Cpy[j] formed between Sxi, Syj and GND are measured. Here, Cp (Cpx[i] and Cpy[i]) formed by the entire sensor line and the TP-GND layer is much larger than the capacitance Cm formed at the intersection of the sensor lines, and the capacitance Cp is several 100 pF (picofarads: × 10⁻¹² F), for example, in a general in-vehicle size touch panel. On the other hand, since the capacitance change of the capacitance Cp caused by a hover of a finger is several 10 fF (femtofarads: × 10⁻¹⁵ F), it is necessary to detect a capacitance change of the order of 1/10,000 (10⁻⁴) for the hover detection, and it is difficult to accurately detect the capacitance change.

Therefore, in order to improve the hover detection sensitivity, there is a method of driving the TP-GND layer with the same sine wave (sinusoidal wave) as the sensor line Sxi or Syj. The figure illustrates a state in which the sensor line Syj is detected, and the detection controller 10 drives the sensor line Syj and the TP-GND layer with a respective sine wave. When the sensor line Sxi is detected, the sensor line Sxi and the TP-GND layer are driven by the same sine wave.

According to this driving system, since both ends of Cpy[j] are driven with the same waveform, the influence of the parasitic capacitance Cpy[j] is canceled in the measurement result, and ideally, only the capacitance change caused by the approach of the finger is detected. However, actually, since the electrical characteristics of the path through which the two sine waves reach both ends of Cpy[j] are different, the waveforms applied to both ends of Cpy[j] do not completely match, and Cpy[j] cannot be completely canceled. Still, the apparent Cp value can be reduced to several pF, and a capacity change of several 10 fF (femtofarads) caused by the hover can be detected on the order of 1/100 (10⁻²).

Fig. 4 is a timing chart of driving/measurement when the hover detection and the touch detection are performed. As illustrated in the drawing, the detection controller 10 detects Cpx[i], Cpy[j], and Cm[i, j] in a time division manner in one cycle. However, it is also possible to alternately detect Cpx and Cpy once every two cycles.

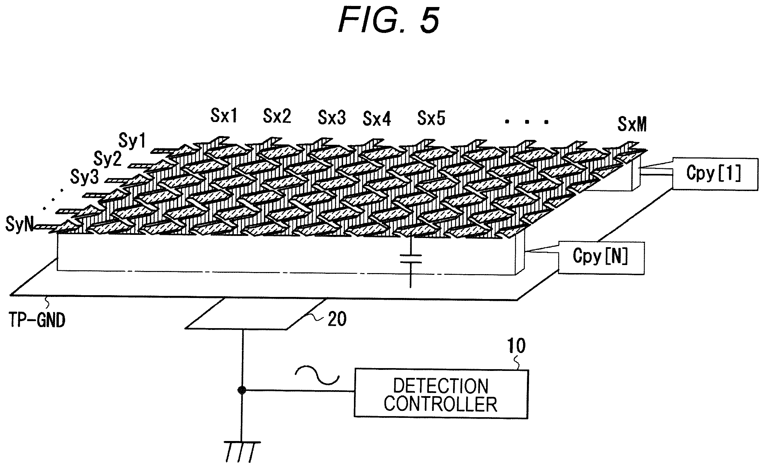

In the hover detection method in which the sensor line and the TP-GND layer are driven by the same sine wave, when pattern wiring in an actual touch panel is taken into consideration, for example, as illustrated in Fig. 5, a connector 20 is arranged at the lower part of the screen of the display, and the TP-GND line is electrically connected only at the lower part of the TP-GND layer via the connector 20. If the entire circumference of the TP-GND layer can be connected to the TP-GND line, a stronger TP-GND layer can be realized, but in this case, the wiring area of the sensor and the pattern of the TP-GND increases, and this causes a design problem such as inability to realize a narrow frame for the display screen. Therefore, the connector 20 is connected to a lower portion of the TP-GND layer.

Considering that the sensor line Sy1 at the top of the screen and the sensor line SyN at the bottom measure the capacitances Cpy[1] and Cpy[N] respectively formed between the sensor line Sy1 and the TP-GND layer and between the sensor line SyN and the TP-GND layer, the TP-GND line when measuring Cpy [1] reaches Cpy[1] from the connector 20 through a large portion of the TP-GND layer. The TP-GND layer is generally formed of thin and transparent ITO or the like, and has a corresponding surface resistance. Therefore, the attenuation of the drive signal of the TP-GND layer when measuring Cpy[1] is larger than that of the drive signal when measuring Cpy[N] by an RC filter defined by the surface resistance and the parasitic capacitance.

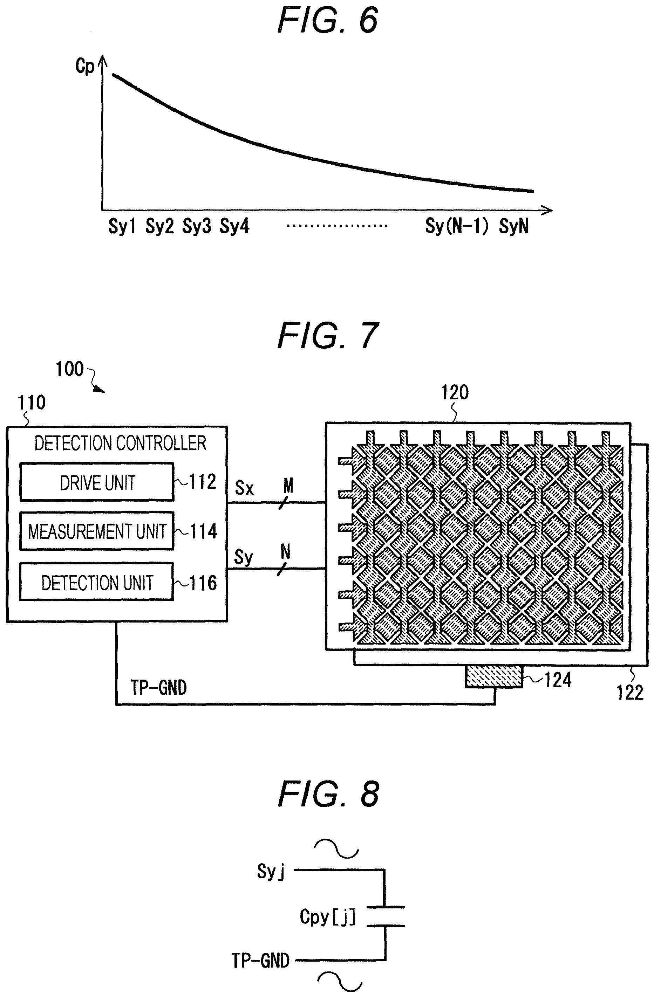

As described above, since the attenuation amount of the drive signal of the TP-GND layer varies depending on the difference in the location in the Y direction on the screen, the difference between the drive signal of the sensor line on the upper side and the drive signal of the TP-GND layer increases, and the apparent Cp value varies for each sensor line in the Y direction as illustrated in Fig. 6. On the other hand, since the change in capacitance caused by the approach of the finger is constant regardless of the location on the screen, there is a problem that the sensitivity of the hover detection at the upper part of the screen is lowered compared to the sensitivity of the hover detection at the lower part of the screen, and the sensitivity of the hover detection differs depending on the location on the screen.

US 2022/057898 A1 discloses an input sensing device which includes an input sensing panel including driving electrodes and sensing electrodes, a driving signal generator that provides driving signals to the driving electrodes, respectively, and a sensing unit that receives sensing signals according to the driving signals from the sensing electrodes, and determines whether a touch is performed based on the sensing signals. Each of the driving signals includes a sinusoidal wave, and frequencies of at least some of the driving signals are different from each other. An input sensing panel ISP may include a sensing area SA that senses an input of a user, for example, a touch and/or a pressure when touching, and a peripheral area provided on at least one side of the sensing area. With reference to Figs. 1-3A, according to touch driving signals TX1 to TX5 provided to driving electrodes IE1-1 to IE1-5, a sensing capacitance may be disposed between the driving electrodes IE1-1 to IE1-5 and the sensing electrodes IE2-1 to IE2-4 arranged in an intersecting X-Y configuration. In an embodiment, the 1-1-th sensing capacitance C11 may be generated between the first driving electrode IE1-1 and the first sensing electrode IE2-1, for example. A detection signal (or transmission signal) is transmitted through sensing signal lines SL2-1 to SL2-4 connected to both ends of the sensing electrodes IE2-1 to IE2-4. In an embodiment, a driving signal generator may include a waveform generator that generates a reference signal including a sinusoidal wave, and a frequency modulator that varies a frequency of the reference signal through frequency division and generates the driving signals. The input sensing panel ISP may sense a contact on or input to the display surface of the display device by an external medium such as a hand or a pen.

US 2017/090610 A1 discloses an input device that includes a matrix sensor that includes a plurality of sensor electrodes arranged in rows on a common surface or plane. The input device may include a plurality of sensor modules coupled to the sensor electrodes that measure capacitive sensing signals corresponding to the electrodes. Instead of measuring sensor electrodes that are in the same column, the embodiments herein simultaneously measure capacitive sensing signals on at least two sensor electrodes that are in the same row. In one example, the sensor electrodes in the row being measured are spaced the same distance from a side of a substrate coupling the electrodes to the sensor modules and may have approximately the same electrical time constant.

US 2014/267137 A1 relates to a method and apparatus for operating an input device having an array of capacitive sensor electrodes disposed on a substrate with a ground plane and a proximity sensor electrode. The input device may switch operation to a proximity mode, wherein the input device uses a ground plane in conjunction with the proximity sensor electrode to perform transcapacitive sensing for determining object presence in the proximity sensing region.

US 2013/335370 A discloses a capacitive proximity detection device which performs proximity touch sensing and includes a shield layer, an electrostatic capacity touch panel disposed with a specific distance above the shield layer, and a proximity touch controller for sensing a non-contact touch by supplying a voltage to the electrostatic capacity touch panel and the shield layer and thus by forming a first capacitance. A rear shield can be driven at either ground potential for noise shielding or at a same potential as an electrode of the detection device.

An object of the present invention is to provide a proximity detection device and a hover detection method that address the above-described conventional problems and improve the sensitivity of hover detection.

The invention relates to a proximity detection device and a hover detection method according to the appended claims. Embodiments are disclosed in the dependent claims.

A proximity detection device according to an aspect of the present invention includes a touch panel including a plurality of sensor lines on an X side, a plurality of sensor lines on a Y side intersecting the plurality of sensor lines on the X side, a planar GND layer arranged to face the sensor lines on the X side and the Y side, and a connection portion electrically connected to a selected position of the GND layer, and a detection unit configured to detect a hover (approach) of an object to the touch panel based on a change in capacitance formed between a selected sensor line on the X side or the Y side and the GND layer, in which when detecting a hover, the detection unit applies a first drive signal to the selected sensor line on the X side or the Y side and applies a second drive signal having the same waveform as the first drive signal to the GND layer via the connection portion, and the detection unit further changes a frequency of the first drive signal according to a position of the selected sensor line.

In one aspect, the detection unit makes a frequency of the first drive signal applied to a sensor line away from the connection portion smaller than a frequency of the first drive signal applied to the sensor line close to the connection portion. In one aspect, the detection unit selects a predetermined number of a plurality of sensor lines from the plurality of sensor lines, and simultaneously applies the first drive signal to the selected plurality of sensor lines. In one aspect, when the connection portion is connected to a left side or a right side of the rectangular GND layer, the detection unit changes a frequency of the first drive signal applied to a sensor line extending in parallel with the direction of the left side or the right side. In one aspect, when the connection portion is connected to an upper side or a lower side of the rectangular GND layer, the detection unit changes a frequency of the first drive signal applied to a sensor line extending in parallel with a direction of the upper side or the lower side. In one aspect, the detection unit detects a touch on the touch panel based on a change in the capacitance formed at an intersection of the sensor line on the X side and the sensor line on the Y side, in addition to the hover detection. In one aspect, the detection unit performs the hover detection by the sensor line on the X side, the hover detection by the sensor line on the Y side, and the touch detection by the sensor lines on the X side and the Y side in one cycle. In one aspect, the drive signal is a sine wave (sinusoidal wave).

A hover detection method according to the present invention relates to a method of a proximity detection device including a touch panel that includes a plurality of sensor lines on an X side, a plurality of sensor lines on a Y side intersecting the plurality of sensor lines on the X side, a planar GND layer arranged to face the sensor lines on the X side and the Y side, and a connection portion electrically connected to a selected position of the GND layer, and the hover detection method includes applying a first drive signal to the selected sensor line on the X side or the Y side, applying a second drive signal having the same waveform as the first drive signal to the GND layer via the connection portion, and changing a frequency of the first drive signal according to a position of the selected sensor line; and detecting a hover of an object to the touch panel based on a change in capacitance formed between the selected sensor line on the X side or the Y side and the GND layer. In one aspect, a frequency of the first drive signal applied to the sensor line away from the connection portion is made smaller than a frequency of the first drive signal applied to the sensor line close to the connection portion.

According to the present invention, when the hover detection is performed, the frequency of the drive signal is changed according to the location of the selected sensor line, so that the apparent capacitance of the sensor line to be measured can be reduced, thereby improving the sensing accuracy of the hover detection.
Fig. 1 is a plan view illustrating an example of a sensor pattern of a capacitive touch panel.
Fig. 2 is a perspective view illustrating an example sensor structure for detecting a hover in the touch panel.
Fig. 3 is a diagram illustrating an equivalent circuit of the capacitive touch panel.
Fig. 4 is a diagram illustrating exemplary timings of hover detection and touch detection in the capacitive touch panel.
Fig. 5 is a diagram for explaining electrical connection of a TP-GND layer when the touch panel is mounted on a display unit.
Fig. 6 is a diagram for explaining a problem of a conventional capacitive touch panel.
Fig. 7 is a diagram illustrating a configuration of a capacitive proximity detection device according to a first embodiment of the present invention.
Fig. 8 is a diagram illustrating a drive waveform when a sensor line Syj is driven by a self-capacitance method.
Fig. 9 is a diagram illustrating a control example of a driving frequency for each sensor line according to the first embodiment of the present invention.
Fig. 10 is a graph illustrating an apparent Cp value for each sensor line according to the first embodiment of the present invention.
Figs. 11A and 11B are diagrams for explaining a configuration of a proximity detection device according to a second embodiment of the present invention.
Fig. 12 is a diagram illustrating a control example of a driving frequency for each sensor line according to the second embodiment of the present invention.
Fig. 13 is a graph illustrating an apparent Cp value for each sensor line according to the second embodiment of the present invention.
Fig. 14 is a perspective view illustrating a sensor structure of a touch panel according to a third embodiment of the present invention.
Fig. 15 is a diagram illustrating a control example of a driving frequency for each sensor line according to the third embodiment of the present invention.
Fig. 16 is a graph illustrating an apparent Cp value for each sensor line according to the third embodiment of the present invention.
Fig. 17 is a diagram illustrating a control example of a driving frequency for each sensor line according to a fourth embodiment of the present invention.
Fig. 18 is a diagram illustrating timing of hover detection and touch detection according to the fourth embodiment of the present invention.

Embodiments of the present invention will be now described. A proximity detection device according to aspects of the present invention includes a capacitive touch panel, and detects a hover (approach) or a contact of an operation target (for example, an object such as user's finger). The proximity detection device according to the present invention is not particularly limited, but provides a display device or a display unit mounted on a display such as a liquid crystal panel and having a user interface function. Such a display device is used in, for example, an in-vehicle device, a multifunctional mobile phone (smartphone), a portable information terminal (tablet computer, laptop computer, notebook computer), and the like.

Next, embodiments of the present invention will be described with reference to the drawings. Fig. 7 is a block diagram illustrating a configuration of the proximity detection device according to an embodiment of the present invention. The proximity detection device 100 includes a capacitive touch panel 120 and a detection controller 110 that detects a hover (approach) or a touch (contact) of an operation target to the touch panel 120.

The touch panel 120 includes, for example, M pieces of sensor lines (Sx1, Sx2 ... SxM) arranged in the X direction and N pieces of sensor lines (Syl, Sy2, ..., SyN) arranged in the Y direction, which are called diamond patterns as illustrated in Fig. 1, a GND layer, particularly a TP-GND layer 122 having a substantially rectangular shape arranged below to face the patterns of these sensor lines, and a connector 124 for electrically connecting the GND or TP-GND layer 122 and the detection controller 110. Generally, the X and Y directions or sides are directions or sides, respectively, which are orthogonal to each other, e.g. of a two-dimensional coordinate system. Generally, the GND layer is a planar GND layer. The GND layer is a layer which is appropriate to be connected with ground potential.

The TP-GND layer 122 is formed in a substantially rectangular shape made of a transparent metal material (for example, ITO or the like), for example, and is formed on a substrate made of glass, plastic, or the like. The connector 124 is attached to the bottom of the TP-GND layer 122, and the connector 124 electrically connects the signal line from the detection controller 110 to the TP-GND layer 122. The touch panel 120 is mounted on, for example, a liquid crystal panel (not illustrated), and provides a user input interface related to an image displayed on the liquid crystal panel.

The detection controller 110 preferably controls the entire operation of touch panel 120. The detection controller 110 includes a drive unit 112 for driving each of the sensor lines Sx on the X side and of the sensor lines Sy on the Y side, a measurement unit 114 for measuring the capacitances Cm, Cpx, and Cpy of each of the sensor line Sx on the X side and the sensor line Sy on the Y side, and a detection unit 116 for detecting a location touched by an operation target on the touch panel 120 based on a change in the capacitance Cm measured by the measurement unit 114 and detecting a hover location based on a change in the capacitance Cpx and Cpy.

The drive unit 112 includes an AC voltage generation unit for driving a respective X-side or Y-side sensor line and the TP-GND layer 122 with a sine wave (sinusoidal wave) when performing hover detection. The sine waves applied to the sensor line on the X side or the Y side and the TP-GND layer 122 as respective first and second drive signals have the same frequency, gain, and phase. As will be described later, the drive unit 112 changes the frequency of the sine wave generated by the AC voltage generation unit according to the location of the sensor line.

For example, as illustrated in Fig. 4, the detection controller 110 measures the capacitance Cpx of the sensor line itself on the X side and the capacitance Cpy of the sensor line itself on the Y side during one cycle, detects a hover based on a change in the capacitance, measures the capacitance Cm at the intersection of the sensor line Sx on the X side and the sensor line Sy on the Y side, and detects a touch based on a change in the capacitance. In the touch detection, it is assumed that the drive unit 112 drives the sensor line Sy on the Y side, and the measurement unit 114 measures the capacitance Cm in the sensor line Sx on the X side. However, the capacitance Cm may be measured in the sensor line Sy on the Y side by driving the sensor line Sx on the X side.

According to the present embodiment, when the hover detection is performed, the driving frequency of the sine wave for driving each of the sensor lines Sy is changed for each sensor line in accordance with the electrical characteristics of each path from the connector 124 to the sensor line Sy.

Fig. 8 illustrates sine waves that drive the sensor line Sy and TP-GND when the capacitance Cpy is measured. When the sensor line Sy is driven by the sine wave of the same frequency, the resistance of the TP-GND layer 122 increases as the distance from the connector 124 increases, and a cutoff frequency by an RC filter decreases (cutoff frequency = 1/2 πRC). Therefore, when the frequency of the sine wave becomes larger than the cutoff frequency, attenuation of the sine wave becomes large on the upper side of the TP-GND layer 122.

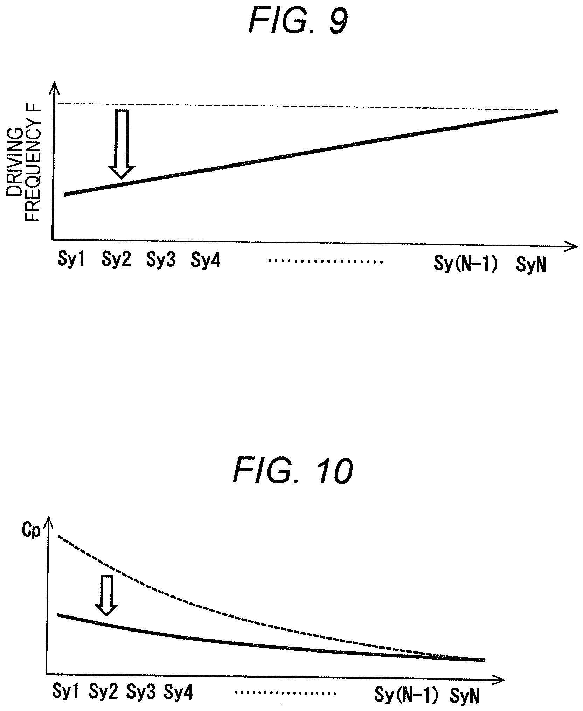

Therefore, according to the present embodiment, as illustrated in Fig. 9, the frequency of the sine wave at the time of driving the sensor line on the upper side (Sy1 side) is made lower than the frequency on the lower side (SyN side), and the attenuation of the sine wave is suppressed on the upper side of the TP-GND layer 122. The frequency of the sine wave is appropriately adjusted according to the electrical characteristics of the TP-GND layer 122 and the electrical measurement of the sensor lines on the X side and the Y side. If the frequency of the sine wave is lower than the cutoff frequency, the attenuation of the sine wave on the upper side of the TP-GND layer 122 can be made substantially 0, the difference between the sine wave of the sensor line and the sine wave of the TP-GND layer 122 can be made as small as possible, and the apparent parasitic capacitance Cpy can be reduced.

Specifically, when measuring the capacitance Cpy of the sensor line Sy in the Y direction, the drive unit 112 gradually increases the frequency F of the sine wave sequentially applied from the sensor line Sy1 to the sensor line SyN, or gradually decreases the frequency F of the sine wave sequentially applied from the sensor line SyN to the sensor line Sy1. At this time, the sine wave having the same frequency as the sensor line Sy is applied to the TP-GND layer 122.

As described above, in the measurement of Cpy of the sensor line Sy on the upper side, the influence of the resistance R of the TP-GND layer 122 becomes larger, and the cutoff frequency of the RC filter with respect to the drive signal of the TP-GND layer 122 becomes lower (that is, the attenuation amount increases in signals of the same frequency). However, the attenuation amount is reduced by lowering the operation frequency of the sine wave, and the difference in the waveforms of the sine waves between the sensor line Sy at both ends of the capacitance Cpy and the TP-GND layer 122 is reduced. As a result, as illustrated in Fig. 10, the difference in apparent Cp measured between the upper side and the lower side of the touch panel 120 can be reduced. With this configuration, it is possible to reduce the sensitivity difference for each sensor line in the Y direction, that is, the sensitivity difference in the hover detection depending on the location in the touch panel 120.

Next, a second embodiment of the present invention will be described. Although the first embodiment illustrates an example in which each sensor line is driven at an individual frequency, the detection controller according to the second embodiment includes a plurality of drive units and measurement units therein, and simultaneously measures changes in capacitance of the plurality of sensor lines.

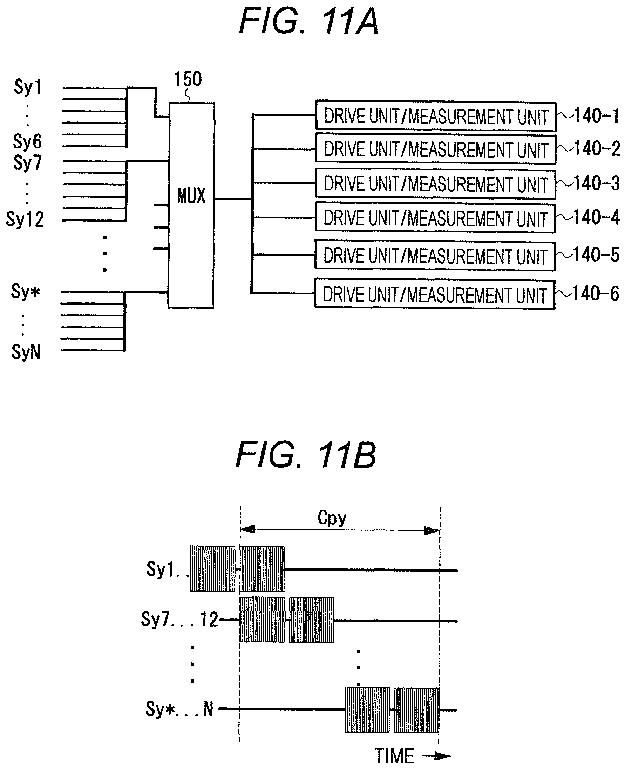

Fig. 11A is an example of measuring the capacitance Cpy of the sensor line Sy, in which the detection controller 110 includes, for example, six drive units/measurement units 140-1, 140-2, ..., and 140-6 therein, and the drive units/measurement units 140-1 to 140-6 are simultaneously connected to each of the six sensor lines Sy selected by a selection circuit (multiplexer MUX) 150.

When the sensors of the sensor lines Sy1 ... SyN are divided into k-pieces of blocks, as illustrated in Fig. 11B, the drive units/measurement units 140-1 to 140-6 are sequentially connected to the blocks of the sensor lines [Sy1 ... Sy6], [Sy7 ... Sy12], [Sy13 ... Sy18] ... [Sy(6 k-5) ... SyN] in a time division manner via the selection circuit 150.

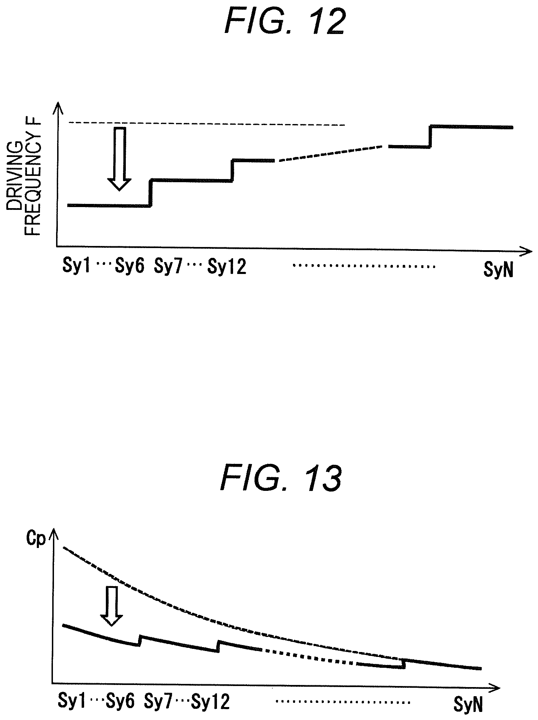

In the case of the present embodiment, the driving frequency of the sine wave at the time of driving each block is controlled to be lower in the upper side than in the bottom side as illustrated in Fig. 12. Although the six sensor lines in each block are driven at the same frequency (that is, the AC voltage generation circuit is shared), even in this case, by determining and operating the operation frequency of each block corresponding to the sensor having the average or maximum resistances R in the block, the difference in the capacitance Cp for each sensor line can be reduced as illustrated in Fig. 13. In addition, although the change in the Cp value is not smooth at the boundary (for example, a boundary between the sensor line Sy6 and the sensor line Sy7) of the block, this is not important, and it is important to reduce the capacitance Cp as a whole and to uniformize the capacitance Cp in order to improve the sensitivity difference in the hover detection.

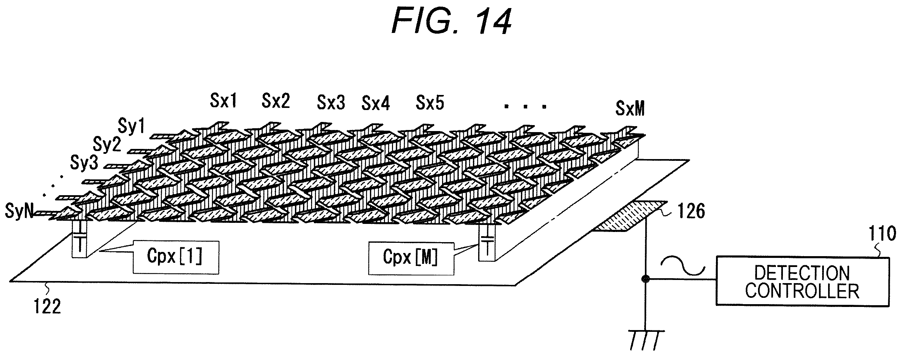

Next, a third embodiment of the present invention will be described. According to the first and second embodiments, the connector 124 is disposed at the center on the lower side of the TP-GND layer 122, but according to the third embodiment, as illustrated in Fig. 14, the connector 126 is attached to the center on the right side of the TP-GND layer 122. In such a configuration, the capacitance Cp changes in the measurement of each sensor line Sx due to the difference in the electrical path from the connector 126 to the sensor line Sx[1 ... M] on the X side.

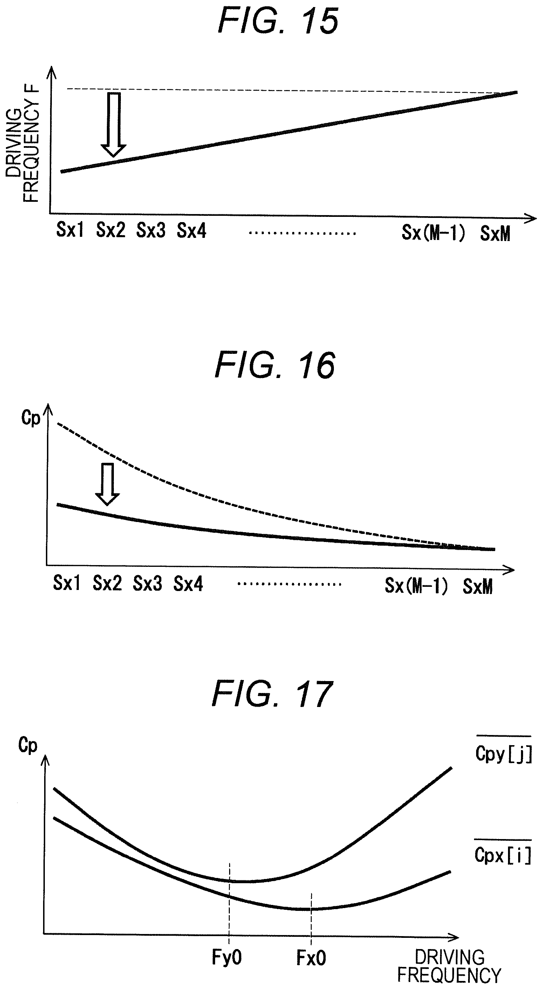

Therefore, according to the third embodiment, as illustrated in Fig. 15, by setting the driving frequency of the sensor line on the left side (Sx1 side) to a lower value than the driving frequency of the sensor line on the right side (SxM side), the attenuation amount of the measurement signal in the sensor line on the left side is reduced similarly to the first and second embodiments. As a result, as illustrated in Fig. 16, the difference between the apparent Cp values measured in the right sensor line and the left sensor line can be reduced, that is, the sensitivity difference for each sensor line on the X side is improved to be small.

Note that, according to the first and second embodiments, the connector 124 is attached to the center on the bottom side (SyN side) of the TP-GND layer 122; however, in a case where the connector 124 is attached to the center on the upper side (Sy1 side) of the TP-GND layer 122, a similar effect can be obtained by setting the driving frequency of the sensor line on the lower side to a lower value with respect to the upper side. In addition, according to the third embodiment, the connector 126 is attached to the center on the right side (SxM side) of the TP-GND layer 122, but in a case where the connector 126 is attached to the center on the left side (Sx1 side) of the TP-GND layer 122, a similar effect can be obtained by setting the driving frequency of the right sensor line to a low value with respect to the left side.

Next, a fourth embodiment of the present invention will be described. In a case where the number of measurement units in the detection controller 110 is larger than the number of sensors (M, N), blocking as in the second embodiment becomes unnecessary, but as illustrated in Fig. 4, the X-side sensor (Sx[1 ... M]) and the Y-side sensor (Sy[1 ... N]) need to be driven at different times to measure Cpx[1 ... M] and Cpy[1 ... N]. At this time, due to the difference in the electric path to the TP-GND layer, Cpx of the X-side sensor and Cpy of the Y-side sensor measured in a case where the driving frequency is changed have different frequencies at which Cpx and Cpy values become very small, as illustrated in Fig. 17. In the drawing, /Cpx[i] and /Cpy[j] are an average value of all the sensor lines Sx and an average value of all the sensor lines Sy.

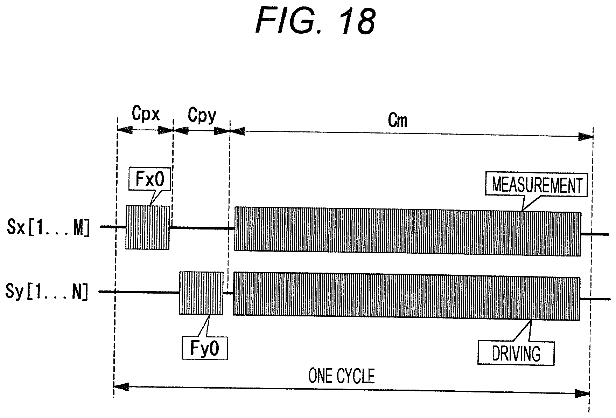

According to the present embodiment, by using such frequency characteristics, as illustrated in Fig. 18, by selecting different driving frequencies suitable for the X-side sensors Sx[1 ... M] and the Y-side sensors Sy[1 ... N] at the time of hover detection, such as the frequency Fx0 for the X-side sensors Sx[1 ... M] and the frequency Fy0 for the Y-side sensors Sy[1 ... N], the detection sensitivity of the X-side sensor Sx and the Y-side sensor Sy can be improved. Further, according to the present embodiment, the drive unit 112 of the detection controller 110 can be easily configured by fixing the driving frequency on the X side and the driving frequency on the Y side.

As described above, according to the present embodiment, by changing the driving frequency for each sensor line according to the electrical characteristics, the apparent parasitic capacitance measured for each sensor line can be reduced, and improvement and stabilization of the hover detection sensitivity can be realized.

According to the above embodiment, an example in which a sine wave (sinusoidal wave) is used as the drive signal has been described, but the present invention is not limited thereto, and a rectangular wave may be used as the drive signal. However, the sine wave has less radiation noise or emission noise than the rectangular wave, which is advantageous for EMI countermeasures.

Furthermore, according to the above embodiments, an example in which the hover detection and the touch detection are performed in a time division manner in one cycle has been described, but the present invention is not limited thereto, and only the hover detection may be performed by the capacitive touch panel, or the hover detection and the touch detection may be performed in different cycles.

The preferred embodiments of the present invention have been described in detail above. However, the present invention is not limited to the specific embodiments.

### Reference Signs List

- 100: Proximity detection device
- 110: Detection controller
- 120: Touch panel
- 122: TP-GND layer
- 124, 126: Connector
- 140: Drive unit/measurement unit
- 150: Selection circuit

## Claims

1. A proximity detection device (100) that is configured to detect an approach of an object, the proximity detection device (100) comprising:
a touch panel (120) including a plurality of sensor lines on an X side, a plurality of sensor lines on a Y side intersecting the plurality of sensor lines on the X side, a planar GND layer (122) arranged to face the sensor lines on the X side and the Y side, and a connection portion (124) electrically connected to a selected position of the GND layer (122); and
a detection unit (116) configured to detect a hover of an object to the touch panel (120) based on a change in capacitance formed between a selected one of the sensor lines on the X side or the Y side and the GND layer (122),
wherein when detecting a hover, the detection unit (116) is configured to apply a first drive signal to the selected sensor line on the X side or the Y side and to apply a second drive signal having the same waveform as the first drive signal to the GND layer (122) via the connection portion (124), and the detection unit (116) is configured to further change a frequency of the first drive signal according to a position of the selected sensor line,
wherein the detection unit (116) is configured to make a frequency of the first drive signal applied to one of the sensor lines away from the connection portion (124) smaller than a frequency of the first drive signal applied to one of the sensor lines close to the connection portion (124).

2. The proximity detection device (100) according to claim 1, wherein the detection unit (116) is configured to select a predetermined number of sensor lines from the plurality of sensor lines, and to simultaneously apply the first drive signal to the selected number of sensor lines.

3. The proximity detection device (100) according to any one of claims 1 to 2, wherein the GND layer (122) is rectangular and when the connection portion (124) is connected to an upper side or a lower side of the rectangular GND layer (122), the detection unit (116) is configured to change a frequency of the first drive signal applied to one of the sensor lines extending in parallel with a direction of the upper side or the lower side.

4. The proximity detection device (100) according to any one of claims 1 to 2, wherein the GND layer (122) is rectangular and when the connection portion (124) is connected to a left side or a right side of the rectangular GND layer (122), the detection unit (116) is configured to change a frequency of the first drive signal applied to one of the sensor lines extending in parallel with the direction of the left side or the right side.

5. The proximity detection device (100) according to any one of claims 1 to 4, wherein the detection unit (116) is configured to detect a touch on the touch panel (120) based on a change in the capacitance formed at an intersection of one of the sensor lines on the X side and one of the sensor lines on the Y side, in addition to the hover detection.

6. The proximity detection device (100) according to claim 5, wherein the detection unit (116) is configured to perform the hover detection by one of the sensor lines on the X side, the hover detection by one of the sensor lines on the Y side, and the touch detection by the sensor lines on the X side and the Y side in one cycle.

7. The proximity detection device (100) according to one of claims 1 to 6, wherein the drive signal is a sine wave.

8. A display device comprising:
the proximity detection device (100) according to any one of claims 1 to 7; and
a display panel including the touch panel (120).

9. A hover detection method of a proximity detection device (100) comprising a touch panel (120) that includes a plurality of sensor lines on an X side, a plurality of sensor lines on a Y side intersecting the plurality of sensor lines on the X side, a planar GND layer (122) arranged to face the sensor lines on the X side and the Y side, and a connection portion (124) electrically connected to a selected position of the GND layer (122), the hover detection method comprising:
applying a first drive signal to a selected one of the sensor lines on the X side or the Y side, applying a second drive signal having the same waveform as the first drive signal to the GND layer (122) via the connection portion (124), and changing a frequency of the first drive signal according to a position of the selected sensor line; and
detecting a hover of an object to the touch panel (120) based on a change in capacitance formed between the selected sensor line on the X side or the Y side and the GND layer (122),
wherein a frequency of the first drive signal applied to one of the sensor lines away from the connection portion (124) is made smaller than a frequency of the first drive signal applied to one of the sensor lines close to the connection portion (124).

## Patentansprüche

1. Näherungserkennungsvorrichtung (100), die dazu ausgebildet ist, die Annäherung eines Objekts zu erfassen, wobei die Näherungserkennungsvorrichtung (100) Folgendes aufweist:
ein Berührungsfeld (120) mit einer Mehrzahl von Sensorreihen auf einer X-Seite, einer Mehrzahl von Sensorreihen auf einer Y-Seite, die die Mehrzahl von Sensorreihen auf der X-Seite schneiden, einer planaren GND-Schicht (122), die den Sensorreihen auf der X-Seite und der Y-Seite zugewandt angeordnet ist, und einem Verbindungsbereich (124), der mit einer ausgewählten Position der GND-Schicht (122) elektrisch verbunden ist; und
eine Detektionseinheit (116), die dazu ausgebildet ist, das Schweben eines Objekts über dem Berührungsfeld (120) auf der Basis einer Änderung der Kapazität zu erfassen, die zwischen einer ausgewählten der Sensorreihen auf der X-Seite oder der Y-Seite und der GND-Schicht (122) entsteht,
wobei bei Erfassung eines Schwebezustands die Detektionseinheit (116) dazu ausgebildet ist, ein erstes Ansteuersignal an die ausgewählte Sensorreihe auf der X-Seite oder der Y-Seite anzulegen und ein zweites Ansteuersignal mit der gleichen Wellenform wie das erste Ansteuersignal über den Verbindungsbereich (124) an die GND-Schicht (122) anzulegen, und die Detektionseinheit (116) ferner dazu ausgebildet ist, die Frequenz des ersten Ansteuersignals in Abhängigkeit von der Position der ausgewählten Sensorreihe zu ändern,
wobei die Detektionseinheit (116) dazu ausgebildet ist, die Frequenz des ersten Ansteuersignals, das an eine der Sensorreihen entfernt von dem Verbindungsbereich (124) angelegt wird, kleiner ist als die Frequenz des ersten Ansteuersignals, das an eine der Sensorreihen in der Nähe des Verbindungsbereichs (124) angelegt wird.

2. Näherungserkennungsvorrichtung (100) nach Anspruch 1,
wobei die Detektionseinheit (116) dazu ausgebildet ist, eine vorbestimmte Anzahl von Sensorreihen aus der Mehrzahl der Sensorreihen auszuwählen und gleichzeitig das erste Ansteuersignal an die ausgewählte Anzahl von Sensorreihen anzulegen.

3. Näherungserkennungsvorrichtung (100) nach einem der Ansprüche 1 bis 2,
wobei die GND-Schicht (122) rechteckig ist und bei Verbindung des Verbindungsbereichs (124) mit einer Oberseite oder einer Unterseite der rechteckigen GND-Schicht (122) die Detektionseinheit (116) dazu ausgebildet ist, die Frequenz des ersten Ansteuersignals zu ändern, das an eine der Sensorreihen angelegt wird, die sich parallel zu der Richtung der Oberseite oder der Unterseite erstreckt.

4. Näherungserkennungsvorrichtung (100) nach einem der Ansprüche 1 bis 2,
wobei die GND-Schicht (122) rechteckig ist und bei Verbindung des Verbindungsbereichs (124) mit der linken Seite oder der rechten Seite der rechteckigen GND-Schicht (122) die Detektionseinheit (116) dazu ausgebildet ist, die Frequenz des ersten Ansteuersignals zu ändern, das an eine der Sensorreihen angelegt wird, die sich parallel zu der Richtung der linken Seite oder der rechten Seite erstreckt.

5. Näherungserkennungsvorrichtung (100) nach einem der Ansprüche 1 bis 4,
wobei die Detektionseinheit (116) dazu ausgebildet ist, eine Berührung auf dem Berührungsfeld (120) auf der Basis einer Änderung der Kapazität, die an einem Schnittpunkt einer der Sensorreihen auf der X-Seite und einer der Sensorreihen auf der Y-Seite entsteht, zusätzlich zu der Schwebeerkennung zu erkennen.

6. Näherungserkennungsvorrichtung (100) nach Anspruch 5,
wobei die Detektionseinheit (116) dazu ausgebildet ist, die Schwebeerkennung durch eine der Sensorreihen auf der X-Seite, die Schwebeerkennung durch eine der Sensorreihen auf der Y-Seite und die Berührungserkennung durch die Sensorreihen auf der X-Seite und der Y-Seite in einem Zyklus auszuführen.

7. Näherungserkennungsvorrichtung (100) nach einem der Ansprüche 1 bis 6,
wobei das Ansteuersignal eine Sinuswelle ist.

8. Anzeigevorrichtung, aufweisend:
die Näherungserkennungsvorrichtung (100) nach einem der Ansprüche 1 bis 7; und
ein Anzeigefeld mit dem Berührungsfeld (120).

9. Schwebeerkennungsverfahren einer Näherungserkennungsvorrichtung (100) mit einem Berührungsfeld (120), das eine Mehrzahl von Sensorreihen auf einer X-Seite, eine Mehrzahl von Sensorreihen auf einer Y-Seite, die die Sensorreihen auf der X-Seite schneiden, eine planare GND-Schicht (122), die den Sensorreihen auf der X-Seite und der Y-Seite zugewandt angeordnet ist, und einen Verbindungsbereich (124) aufweist, der mit einer ausgewählten Position der GND-Schicht (122) elektrisch verbunden ist,
wobei das Schwebeerkennungsverfahren folgende Schritte aufweist:
Anlegen eines ersten Ansteuersignals an eine ausgewählte der Sensorreihen auf der X-Seite oder der Y-Seite, Anlegen eines zweiten Ansteuersignals mit der gleichen Wellenform wie das erste Ansteuersignal an die GND-Schicht (122) über den Verbindungsbereich (124) und Ändern der Frequenz des ersten Ansteuersignals in Abhängigkeit von der Position der ausgewählten Sensorreihe; und
Detektieren des Schwebens eines Objekts über dem Berührungsfeld (120) auf der Basis einer Änderung der Kapazität, die zwischen der ausgewählten Sensorreihe auf der X-Seite oder der Y-Seite und der GND-Schicht (122) entsteht, wobei die Frequenz des ersten Ansteuersignals, das an eine der Sensorreihen entfernt von dem Verbindungsbereich (124) angelegt wird, kleiner ist als die Frequenz des ersten Ansteuersignals, das an eine der Sensorreihen in der Nähe des Verbindungsbereichs (124) angelegt wird.

## Revendications

1. Dispositif de détection de proximité (100) qui est configuré pour détecter un rapprochement d'un objet, le dispositif de détection de proximité (100) comprenant :
un panneau tactile (120) comprenant une pluralité de lignes de capteur sur un côté X, une pluralité de lignes de capteur sur un côté Y croisant la pluralité de lignes de capteur sur le côté X, une couche de GND plane (122) agencée de manière à faire face aux lignes de capteur sur le côté X et le côté Y, et une portion de connexion (124) reliée électriquement à une position sélectionnée de la couche de GND (122) ; et
une unité de détection (116) configurée pour détecter un survol d'un objet par rapport au panneau tactile (120) sur la base d'un changement de capacité formée entre une ligne sélectionnée parmi les lignes de capteur sur le côté X ou le côté Y et la couche de GND (122),
le dispositif étant tel que, lors de la détection d'un survol, l'unité de détection (116) est configurée pour appliquer un premier signal d'excitation à la ligne de capteur sélectionnée sur le côté X ou le côté Y et pour appliquer un second signal d'excitation ayant la même forme d'onde que le premier signal d'excitation à la couche de GND (122) via la portion de connexion (124), et l'unité de détection (116) est configurée pour en outre modifier une fréquence du premier signal d'excitation en fonction d'une position de la ligne de capteur sélectionnée,
l'unité de détection (116) étant configurée pour rendre une fréquence du premier signal d'excitation appliqué à l'une des lignes de capteur éloignée de la portion de connexion (124) inférieure à une fréquence du premier signal d'excitation appliqué à l'une des lignes de capteur proche de la portion de connexion (124).

2. Dispositif de détection de proximité (100) selon la revendication 1, l'unité de détection (116) étant configurée pour sélectionner un nombre prédéterminé de lignes de capteur parmi la pluralité de lignes de capteur, et pour appliquer simultanément le premier signal d'excitation au nombre sélectionné de lignes de capteur.

3. Dispositif de détection de proximité (100) selon l'une quelconque des revendications 1 à 2,
la couche de GND (122) étant rectangulaire et, lorsque la portion de connexion (124) est reliée à un côté supérieur ou à un côté inférieur de la couche de GND rectangulaire (122), l'unité de détection (116) étant configurée pour modifier une fréquence du premier signal d'excitation appliqué à l'une des lignes de capteur s'étendant en parallèle à une direction du côté supérieur ou du côté inférieur.

4. Dispositif de détection de proximité (100) selon l'une quelconque des revendications 1 à 2, la couche de GND (122) étant rectangulaire et, lorsque la portion de connexion (124) est reliée à un côté gauche ou à un côté droit de la couche de GND rectangulaire (122), l'unité de détection (116) étant configurée pour modifier une fréquence du premier signal d'excitation appliqué à l'une des lignes de capteur s'étendant en parallèle à une direction du côté gauche ou du côté droit.

5. Dispositif de détection de proximité (100) selon l'une quelconque des revendications 1 à 4, l'unité de détection (116) étant configurée pour détecter un toucher sur le panneau tactile (120) sur la base d'un changement de capacité formée à une intersection de l'une des lignes de capteur sur le côté X et de l'une des lignes de capteur sur le côté Y, en plus de la détection de survol.

6. Dispositif de détection de proximité (100) selon la revendication 5, l'unité de détection (116) étant configurée pour effectuer la détection de survol par l'une des lignes de capteur sur le côté X, la détection de survol par l'une des lignes de capteur sur le côté Y, et la détection de toucher par les lignes de capteur sur le côté X et le côté Y en un seul cycle.

7. Dispositif de détection de proximité (100) selon l'une quelconque des revendications 1 à 6, le signal d'excitation étant une onde sinusoïdale.

8. Dispositif d'affichage comprenant :
le dispositif de détection de proximité (100) selon l'une quelconque des revendications 1 à 7 ; et
un panneau d'affichage comprenant le panneau tactile (120).

9. Procédé de détection de survol d'un dispositif de détection de proximité (100) comprenant un panneau tactile (120) qui comprend une pluralité de lignes de capteur sur un côté X, une pluralité de lignes de capteur sur un côté Y croisant la pluralité de lignes de capteur sur le côté X, une couche de GND plane (122) agencée de manière à faire face aux lignes de capteur sur le côté X et le côté Y, et une portion de connexion (124) reliée électriquement à une position sélectionnée de la couche de GND (122), le procédé de détection de survol comprenant :
appliquer un premier signal d'excitation à l'une des lignes de capteur sélectionnée sur le côté X ou le côté Y, appliquer un second signal d'excitation ayant la même forme d'onde que le premier signal d'excitation à la couche de GND (122) via la portion de connexion (124), et modifier une fréquence du premier signal d'excitation en fonction d'une position de la ligne de capteur sélectionnée ; et
détecter un survol d'un objet par rapport au panneau tactile (120) sur la base d'un changement de capacité formée entre la ligne de capteur sélectionnée sur le côté X ou le côté Y et la couche de GND (122),
une fréquence du premier signal d'excitation appliqué à l'une des lignes de capteur éloignée de la portion de connexion (124) étant rendue inférieure à une fréquence du premier signal d'excitation appliqué à l'une des lignes de capteur proche de la portion de connexion (124).
